(19) Europäisches Patentamt
European Patent Office
Office européen des brevets

(11) **EP 4 239 703 A2**

(12) **EUROPEAN PATENT APPLICATION**

(43) Date of publication:
**06.09.2023 Bulletin 2023/36**

(21) Application number: **22192324.6**

(22) Date of filing: **26.08.2022**

(51) International Patent Classification (IPC):
*H01M 4/04* (2006.01)     *H01M 10/052* (2010.01)
*H01M 4/133* (2010.01)    *H01M 4/1393* (2010.01)
*H01M 4/36* (2006.01)     *H01M 10/0525* (2010.01)
*H01M 4/02* (2006.01)

(52) Cooperative Patent Classification (CPC):
**H01M 4/04; H01M 4/133; H01M 4/1393;
H01M 4/364; H01M 4/366; H01M 10/052;
H01M 10/0525;** H01M 2004/021; H01M 2004/027

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2022 KR 20220027589**

(71) Applicant: **SK On Co., Ltd.**
**Seoul 03161 (KR)**

(72) Inventors:
• **PARK, Sung Jun**
**34124 Daejeon (KR)**
• **KIM, In Ha**
**34124 Daejeon (KR)**
• **JO, Byoung Wook**
**34124 Daejeon (KR)**

(74) Representative: **Stolmár & Partner**
**Patentanwälte PartG mbB**
**Blumenstraße 17**
**80331 München (DE)**

(54) **ANODE FOR SECONDARY BATTERY, METHOD FOR PREPARING THE SAME, AND SECONDARY BATTERY COMPRISING THE ANODE**

(57)    An anode for s secondary battery, a method for preparing the same, and a secondary battery including the anode are provided. The anode for a secondary battery includes an anode current collector and an anode mixture layer including an anode active material formed on at least one surface of the anode current collector, wherein the anode mixture layer has a colorimetric value of 42.5 or greater, and a Z-tensor value of an internal pore of the anode mixture layer is 0.25 or greater.

EP 4 239 703 A2

**Description**

**BACKGROUND**

**1. FIELD**

The present disclosure relates to an anode for a secondary battery, a method for preparing the same, and a secondary battery including the anode.

**2. DESCRIPTION OF RELATED ART**

In general, an anode for a secondary battery is prepared by applying an anode mixture including an anode active material, a conductive agent, a binder, and a solvent to an anode current collector, drying the anode mixture, and rolling the anode current collector having the dried anode mixture thereon.

In the electrode preparing process, an anode active material having an anisotropic structure is mainly oriented in a horizontal direction parallel to the anode current collector, and pores formed between the anode active materials are also mainly oriented in the horizontal direction. As the anode active material and the pores are oriented in the horizontal direction as described above, lithium ions migrate through the pores in the horizontal direction formed between the anode active materials in the process of charging or discharging the secondary battery.

Meanwhile, demand for high performance and long-term use of secondary batteries, along with the recent increase in demand for secondary batteries, has increased, and secondary batteries have increasingly higher capacities by increasing a loading amount of electrodes.

However, when the pores in the anode are oriented in the horizontal direction as described above, a movement distance of lithium ions is significantly increased along with an increase in a loading amount of the electrode, and such an increase in the movement distance may cause an increase in resistance during a charging process to increase a time for charging and discharging.

In particular, in the case of charging or discharging at a high C-rate, lithium salt (Li-plating) is precipitated on a surface of the electrode, thereby degrading battery capacity and impairing battery safety as a charging/discharging cycle is repeated.

In order to solve this problem, Korean Patent No. 2003-0052949 discloses a method of preparing an anode by applying an anode paste including an anode active material to a substrate and then orienting graphite powder particles by applying a magnetic field, and performing drying and rolling.

**SUMMARY**

An aspect of the present disclosure may provide an anode for a lithium secondary battery having excellent charging and discharging performance without deterioration of capacity and lifespan characteristics when applied to a battery.

An aspect of the present disclosure may also provide a lithium secondary battery including an anode for the lithium secondary battery and a method for preparing the same.

According to an aspect of the present disclosure, an anode for a secondary battery may include: an anode current collector; and an anode mixture layer including an anode active material formed on at least one surface of the anode current collector, wherein the anode mixture layer has a colorimetric value of 42.5 or greater, and a Z-tensor value of an internal pore of the anode mixture layer is 0.25 or greater.

The anode active material may have an orientation arrangement value of 0.5 or less expressed by Equation 1 below.

[Equation 1]

$$A_h = \frac{1}{M} \sum_{j=0}^{n} \left( R_0 \cos^2\theta + \frac{\sin^2\theta}{R_0} \right)^{-3/2}$$

In Equation 1, $A_h$ is an orientation arrangement value, $R_0$ is the ratio of a major axis length to a minor axis length of an ellipsoid, in which there is no orientation arrangement when the value $R_0$ is 1, 8 is a radian formed by the current collector and the artificial graphite measured by X-ray diffractometry, M is a multiplicity factor, and n is the number of trials.

The anode active material may have a (002) plane oriented in a direction perpendicular to the current collector.

The anode mixture layer may have an electrode density of 1.50 g/cm$^3$ or greater.

The anode active material may include a carbon-based anode active material.

The carbon-based anode active material may have an anisotropic structure.

The carbon-based anode active material may include artificial graphite, natural graphite, or a mixture thereof.

The carbon-based anode active material may be amorphous, plate-shaped, flake-shaped, spherical, fibrous, or a mixture of at least two or more thereof.

The anode active material may further include at least one selected from the group consisting of a silicon (Si)-based anode active material, a tin (Sn)-based anode active material, and a lithium vanadium oxide anode active material.

The anode mixture layer may include 94 to 98 wt% of an anode active material, 0.1 to 3 wt% of a conductive agent, and 1.5 to 3 wt% of a binder based on a total weight of the anode mixture layer.

According to another aspect of the present disclosure, a method for preparing an anode for a secondary battery may include: operation A of forming an anode mixture slurry layer by applying an anode mixture slurry including an anode active material to at least one surface of an anode current collector; and operation B of changing an orientation of the anode active material by applying a magnetic field to the anode mixture slurry layer, wherein the anode mixture layer has a colorimetric value of 42.5 or greater, and a Z-tensor value of an internal pore of the anode mixture layer is 0.25 or greater.

The method may further include operation C of drying the anode mixture slurry layer, wherein operation B may be performed after operation A and before operation C or may be performed simultaneously with operation C.

In operation B, a magnetic field in which a magnetic force line direction and a magnetic force strength change may be applied from both upper and lower surfaces of the anode current collector.

The magnetic field may be applied in a direction perpendicular to the anode current collector.

In the magnetic field, any one first magnetic force line, among a magnetic force line in a direction from an upper surface of the anode current collector to a lower surface thereof and a magnetic force line in a direction from the lower surface of the anode current collector to the upper surface thereof, and the other second magnetic force line may be alternately applied periodically.

The first magnetic force line may decrease after an increase in magnetic force strength to be changed into a second magnetic force line, and a magnetic force strength of the changed second magnetic force line may be increased and then decreased.

The first magnetic force line and the second magnetic force line may have a sine wave in a magnetic force strength and a magnetic force line direction.

The magnetic force line direction may change with a cycle of 100 to 1000 mm.

The anode active material may have a (002) plane oriented in a direction perpendicular to the anode current collector.

The magnetic field may be 4,000G or greater.

The magnetic field may be applied for 1 second or longer.

The anode mixture slurry may have a viscosity of 150,000 cp (measured at 25°C and a shear rate of 0.1 s$^{-1}$) or less.

According to another aspect of the present disclosure, a lithium secondary battery may include: an anode for a lithium secondary battery; a cathode; and a separator interposed between the anode for a lithium secondary battery and the cathode, wherein the anode for a lithium secondary battery is the same as described above.

**BRIEF DESCRIPTION OF DRAWINGS**

The above and other aspects, features and other advantages of the present disclosure will be more clearly understood from the following detailed description taken in conjunction with the accompanying drawings, in which:

FIG. 1 is a schematic cross-sectional view illustrating a structure of an anode for a lithium secondary battery;

FIG. 2 is a three-dimensional image of an anode mixture layer obtained using an X-ray microscope for an anode mixture layer.

FIG. 3 is a 3D image of an internal pore structure of an anode mixture layer obtained by converting the 3D image of the anode mixture layer obtained in FIG. 1;

FIG. 4 is a diagram schematically illustrating a concept of an orientation tensor for evaluating the degree of orientation of pores inside an anode mixture layer in a 3D structure, in which

(a) illustrates a case in which the internal pores are randomly oriented (3D random) in all axial directions of X1, X2, and X3,

(b) illustrates a case in which the internal pores are oriented on a plane (planar random) formed by two axes of X1 and X2, and
(c) illustrates a case in which the internal pores are aligned in the X1 axial direction to be oriented;

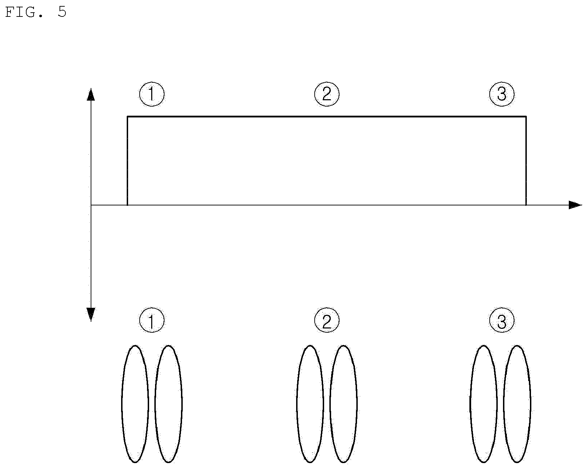

FIG. 5 is a diagram conceptually illustrating the orientation of the anode active material when a magnetic field having a constant magnetic force strength and a magnetic field direction is applied.

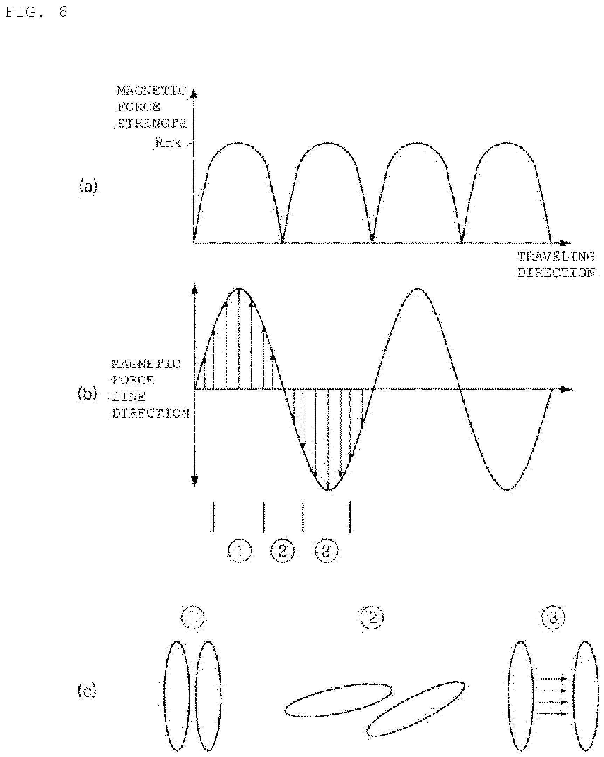

FIG. 6(a) and FIG 6(b) are views conceptually illustrating a change pattern of magnetic force strength and magnetic force line direction with respect to a magnetic field in which magnetic force strength and magnetic force line direction are changed according to an electrode traveling direction, and FIG. 6(c) is a view conceptually illustrating a corresponding change in orientation of an anode active material;

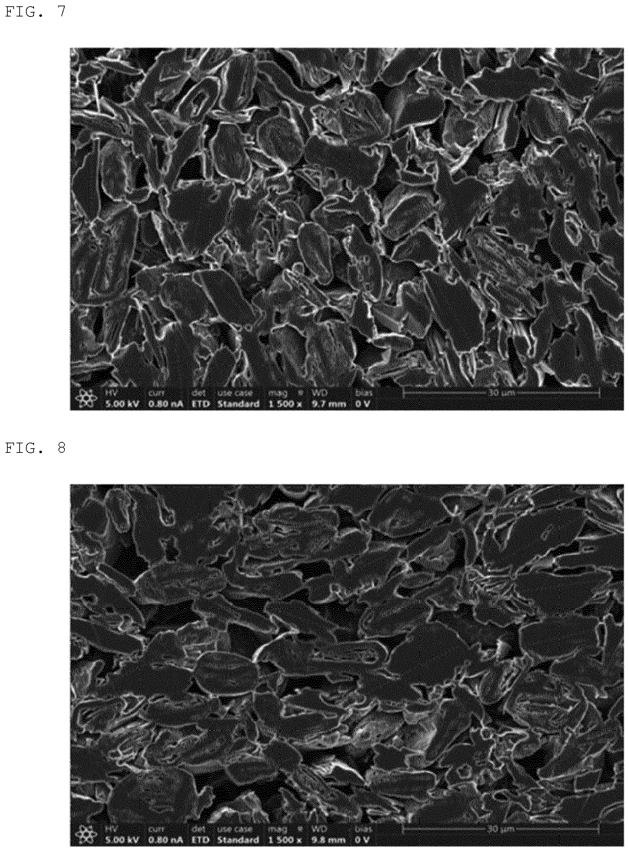

FIG. 7 is a scanning electron microscope (SEM) photograph of an anode prepared in Example 1; and
FIG. 8 is an SEM photograph of an anode prepared in Comparative Example 1.

## DETAILED DESCRIPTION

Exemplary embodiments of the present disclosure will now be described in detail with reference to the accompanying drawings.

The present disclosure provides an anode in which pores between anode active materials are arranged in a vertical direction as an anode active material is arranged in a vertical direction with respect to the anode current collector, a method for preparing the anode, and a secondary battery including the anode.

In general, an anode for a secondary battery is prepared through a process of applying an anode mixture slurry prepared including an anode active material, a conductive agent, a binder, and a solvent to an anode current collector, drying the slurry, and rolling the dried slurry. In this process, the anode active material having an anisotropic structure is mainly oriented in a direction parallel to the anode current collector (a horizontal direction).

However, when the anode active material is oriented in the horizontal direction as described above, as a loading amount of the electrode increases, a migration path of lithium ions increases in a charging/discharging process, thereby increasing resistance. In particular, when charging is performed at a high C-rate, lithium salt (Li-plating) is formed on a surface of the electrode and the battery capacity decreases as a cycle is repeated,

Lithium ions migrate through the pores of the anode mixture layer during the charging and discharging process of the secondary battery, and orienting the pores of the anode mixture layer in a vertical direction with respect to the anode current collector may be more effective in shortening the migration path of lithium ions. That is, as the pores in the anode mixture layer are oriented in a direction (vertical direction) perpendicular to the anode current collector, a path through which lithium ions migrate to the inside becomes shorter and intercalation and deintercalation of lithium ions may be easily performed during the charging and discharging process. As a result, charging/discharging efficiency at a high rate may be improved, so that the rapid charging performance may be improved. Also, diffusion resistance of lithium ions into the electrode during the charging and discharging process may be reduced, so that formation of lithium salt (Li-plating) on the electrode surface may be suppressed.

Accordingly, the present disclosure provides an anode in which pores are developed in the anode mixture layer to shorten the migration path of lithium ions and the pores of the anode mixture layer are oriented in a vertical direction with respect to the anode current collector.

By orienting the anode active material included in the anode mixture layer in a vertical direction with respect to the anode current collector, the pores of the anode mixture layer may be vertically oriented.

In general, an anode for a lithium ion secondary battery uses graphite as an anode active material, and graphite has a layer structure having a plurality of layers. In the charging/discharging process of the battery, charging and discharging may be performed while lithium ions are intercalated and deintercalated through the pores between the plurality of layers of graphite, and in this case, the lithium ions may be mainly intercalated and deintercalated in the layer direction of graphite, and thus, output characteristics may be limited.

In particular, when the (002) plane or the layer surface of the graphite particles is oriented in a direction parallel to the surface of the anode current collector, the migration path of lithium ions intercalated and deintercalated in the direction perpendicular to the surface of the current collector may be lengthened. Therefore, during charging and discharging, diffusion of lithium ions in the anode mixture layer may be degraded and a charging/discharging rate and capacity may decrease.

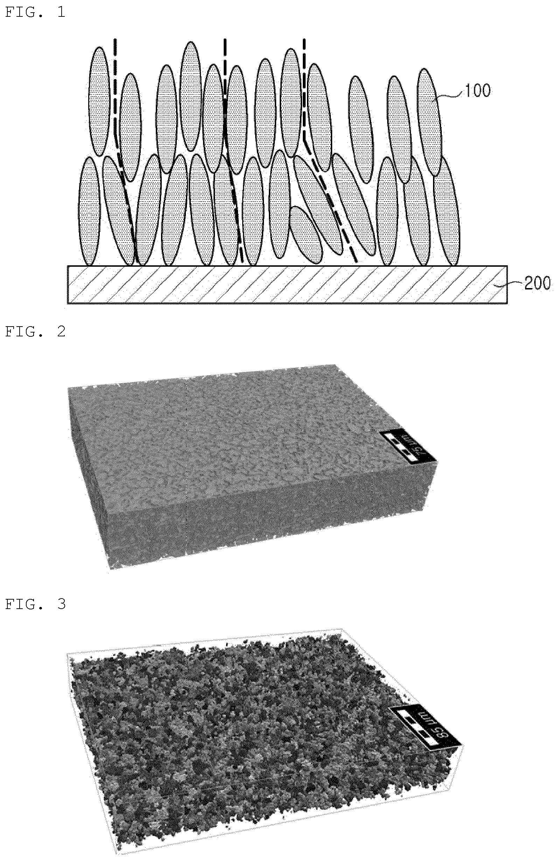

FIG. 1 is a cross-sectional view schematically illustrating a structure of an anode according to an exemplary embodiment in the present disclosure, illustrating an example in which an anode mixture layer including an anode active material 100 is formed on one surface of an anode current collector 200.

As illustrated in FIG. 1, when the anode active material 100 is arranged in a vertical direction with respect to the anode current collector 200, lithium ions may be intercalated and deintercalated along a migration path as indicated by the dotted line, so that a migration rate of lithium ions may be improved. In particular, as for the shortening of the migration path of lithium ions, when graphite particles are used as the anode active material, if the (002) plane of the graphite particles is oriented in a direction perpendicular to the surface of the current collector, the path in which lithium ions are intercalated and deintercalated may be shortened.

The shortening of the migration path of lithium ions as the (002) plane of the anode active material is oriented in the vertical direction with respect to the anode current collector may be confirmed through a colorimetric value.

The 'colorimetric value' refers to a value L indicating brightness in color coordinates such as L*a*b*. The value L is represented from 0 to 100. The value L close to 0 represents white, and the value L close to 100 represents black.

As the anode active material is oriented in the vertical direction with respect to the anode current collector, an edge surface of graphite is exposed to the surface and changed to a color close to black, so that the colorimetric value increases. Therefore, as the colorimetric value increases, the anode active material is predominantly oriented in the vertical direction with respect to the anode current collector, so that vertical orientation of the anode active material may be evaluated to be excellent, and in addition, pores may be developed between the anode active material and the pores may be evaluated to be oriented in the vertical direction.

Equipment for measuring the colorimetric value is not limited, but for example, equipment such as a spectrophotometer, a chroma meter, a color reader, and a color illuminometer may be used. For example, the colorimetric value may be measured to be indicated using KONIKA MINOLTA CR-410 chroma meter.

In the anode for a lithium secondary battery according to an exemplary embodiment in the present disclosure, the colorimetric value of the anode mixture layer may be 42.5 or greater. If the colorimetric value is less than 42.5, the orientation of the anode active material in a direction perpendicular to the anode current collector may not be developed, and thus the orientation of the pores may not be sufficient. Accordingly, the effect of shortening the migration path of lithium ions may not be sufficient, the improvement of the charging/discharging rate may not be sufficient, and deformation of the anode may be caused during repeated charging and discharging processes.

Since the colorimetric value indicates that the anode active material is oriented in the vertical direction with respect to the anode current collector as the value increases, an upper limit thereof is not particularly limited, but for example, the colorimetric value may be 100 or less, 95 or less, 90 or less, 85 or less, 80 or less, 75 or less, or 70 or less, and may also be 65 or less.

In the anode according to an exemplary embodiment, as described above, when the colorimetric value of the anode mixture layer is 42.5 or greater, the orientation of the pores as the anode active material is oriented in the vertical direction with respect to the anode current collector may be improved. As the orientation of the pores are improved, the migration path of lithium ions may be shortened, thereby reducing resistance in the battery, so that the charge/discharge rate of the battery may be improved, an occurrence of plating of lithium ions may be suppressed, and battery life may be improved.

According to an exemplary embodiment in the present disclosure, by introducing the anode current collector coated with the anode mixture slurry into a device to which a magnetic field is applied, the (002) plane of the anode active material particles may be oriented to be perpendicular to the plane of the anode current collector.

If the anode active material particles are randomly oriented and distributed with respect to the anode current collector, respectively, the path through which lithium ions migrate in the anode mixture layer may become longer, thereby increasing resistance in the charging process. In particular, in the case of performing charging at a high C-rate, lithium salt (Li-plating) is formed on the surface of the electrode, thereby degrading the battery capacity as the cycle is repeated. However, when the (002) plane of the anode active material is oriented in the vertical direction with respect to the plane of the anode current collector, the pores in the anode mixture layer may be oriented perpendicular to the anode current collector, thereby shortening the migration path of lithium ions, and accordingly, power characteristics of the battery may be further improved.

The orientation of the anode active material particles may be determined according to X-ray diffraction. Specifically, the X-ray of a specific irradiated wavelength $\lambda$ may represent diffraction peaks having different intensities at a specific incident angle 8 or diffraction angle $2\theta$, and here, a peak of the (002) plane may be analyzed to determine the orientation of the anode active material particles.

In exemplary embodiments, the anode active material may have an orientation arrangement value of 0.5 or less expressed by Equation 1 below.

$$[Equation\ 1]$$

$$A_h = \frac{1}{M}\sum_{j=0}^{n}\left(R_0\cos^2\theta + \frac{\sin^2\theta}{R_0}\right)^{-3/2}$$

In Equation 1 above, $A_h$ is an orientation arrangement value, $R_0$ is the ratio of a major axis length to a minor axis length of an ellipsoid, in which there is no orientation arrangement when the value $R_0$ is 1, 8 is a radian formed by the current collector and the artificial graphite measured by X-ray diffraction, M is a multiplicity factor, and n is the number of trials.

As the orientation arrangement value is closer to 0, it means that the (002) plane of the anode active material is arranged to be perpendicular to the current collector, and as the orientation arrangement value is closer to 1, it means that the (002) plane of the anode active material is oriented to be horizontal to the current collector. The orientation arrangement may be measured, for example, by XRD analysis (X-ray diffraction), and by analyzing the intensity of the peak of the (002) plane of the anode active material particles, an angle between the anode active material and the anode current collector may be measured and the orientation arrangement value of the anode active material may be calculated according to Equation 1 above.

If the orientation arrangement value of the anode active material exceeds 0.5, a surface area may be large due to an irregular structure and the edge surface may be exposed as it is, so that the anode active material may be destroyed due to penetration of an electrolyte or a decomposition reaction.

In XRD analysis (X-ray diffraction), XRD measurement conditions known in the art may be used without particular limitations, and, for example, XRD measurement conditions may be as follows.

X-ray: Cu K alpha
K-Alpha1 wavelength: 1.540598 Å
Generator voltage: 40kV
Tube current: 30mA
Scan Range: 10~80
Scan Operation Size: 0.026
Ni filter, Solar slit (0.04rad, 2ea), Diffracted anti-scatter slit 7.5mm
Divergence slit: 1/4°
Anti-scatter slit: 1/2°
Time per operation: 100s

As described above, the lithium ions may migrate through the pores of the anode mixture layer. Accordingly, when the pores in the anode mixture layer are oriented in the vertical direction with respect to the anode current collector, the migration path of lithium ions may be shortened. Such orientation of the pores may be confirmed by a Z-tensor value.

The Z-tensor value may be obtained by three-dimensionally imaging the pores inside the anode mixture layer using an X-ray microscope, and then evaluating an orientation tensor in each axial direction. Accordingly, as an exemplary embodiment, an anode having a Z-tensor of a specific value is provided. That is, a secondary battery having improved charging/discharging efficiency at a high rate and rapid charging performance may be provided by developing pores forming a migration path of lithium ions with respect to the anode mixture layer and improving the degree of orientation of the pores.

Orienting the pores in the vertical direction does not mean that all the pores should be oriented vertically but means that the pores oriented in the vertical direction exist predominantly, and the degree of orientation of the pores oriented in the vertical direction with respect to the current collector may be indicated by a Z-tensor.

The anode is an anode for a lithium ion secondary battery including an anode mixture layer on at least one surface of the anode current collector, and the pores in the anode mixture layer may have a Z-tensor value of 0.25 or greater.

In the measurement of the Z-tensor value, the pores inside the electrode may be imaged using an X-ray microscope with respect to the anode, and the Z-tensor value may be derived from the obtained image of the pores.

More specifically, a 3D image of the pores inside the anode mixture layer may be obtained using an X-ray microscope for the inside of the anode mixture layer, as illustrated in FIG. 2. Furthermore, the obtained image may undergo 3D rendering to be converted into a 3D image of a pore structure inside the anode mixture layer as illustrated in FIG. 3.

As a device capable of obtaining such a 3D image, a facility including an X-ray source, detectors, and a lens capable of magnifying the source between the detectors may be used, which may be, for example, a Zeiss Xraida 520 Versa. In addition, the software for the 3D rendering may include GEODICT.

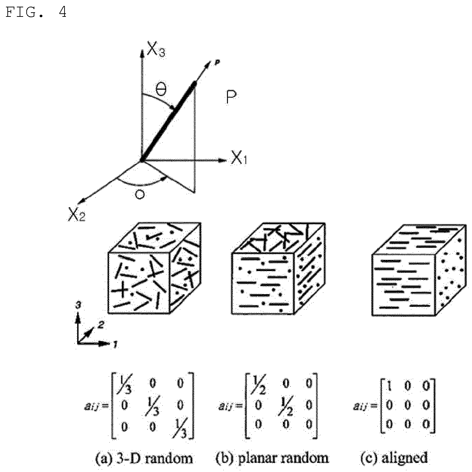

From the obtained 3D image of the internal pores of the anode mixture layer, the degree of orientation in each axial direction of the pores may be represented as an orientation tensor. That is, the 3D image for each pore may be evaluated in three axes of X, Y, and Z, and in an entity, the sum of the tensors on the three axes becomes '1' and a concept thereof is schematically illustrated in FIG. 4.

FIG. 4 illustrates an orientation tensor representing the degree of orientation for any one entity, that is, the pore, in which (a) illustrates that pores are oriented in all axial directions of X1, X2 and X3, that is, three-dimensionally randomly (3D random), (b) illustrates that pores are oriented on a plane formed by a certain two axes of X1 and X2, that is, randomly oriented on one plane (planar random), and (c) illustrates that pores are aligned and oriented in an axial direction of X1.

As a magnitude of the orientation tensor (Z-tensor) value of a specific axis increases, it means that the pores are oriented on the corresponding axis. That is, as the Z-tensor value increases, it may be evaluated that the orientation of the pores in the Z-axis (corresponding to the X3 axis in FIG. 4) direction is developed.

Referring to FIG. 4, for example, when the X, Y, and Z-tensor values are 0.33 in the anode mixture layer, respectively, the pores are randomly oriented as illustrated in (a), and when the Z-tensor value is greater than 0.33, it means that the pores of the anode mixture layer have a predominant tendency to be oriented in the Z-axis direction, that is, in a direction perpendicular to the anode current collector. That is, when the Z-tensor value is greater than 0.33, it may mean that pores oriented in the Z-axis direction are predominantly formed in the anode mixture layer.

When the orientation of the pores in the Z-axis is developed, a shape of the pores on the corresponding axis is developed, so that a length of the pores on the corresponding axis in the entity may be increased. According to an exemplary embodiment, the Z-tensor value of the pores inside the anode mixture layer preferably has a value of 0.25 or greater. When the Z-tensor value of the pores is 0.25 or greater, the orientation that the pores inside the anode mixture layer are oriented in the vertical direction with respect to the anode current collector increases, thereby shortening the migration path of lithium ions.

As an exemplary embodiment, the degree of orientation of the pores in the anode mixture layer may be improved by allowing the anode current collector with the anode mixture slurry applied thereto to pass through a magnetic field applied by a magnet.

The anode mixture slurry is applied and dried while the anode current collector is traveled in a certain direction, or the anode current collector on which the anode mixture slurry is applied is traveled to be dried, and in the process of applying the anode mixture slurry or after the anode mixture slurry is applied, or in the process of drying the anode mixture slurry after applying the anode mixture slurry to the anode current collector, a magnetic field may be applied in a vertical direction with respect to the anode current collector to orient the pores in the anode mixture layer, and accordingly, an anode having the colorimetric value as described above and having the Z-sensor value described above may be prepared.

Generally, the anode mixture slurry is applied and dried, while the anode current collector is traveled in a certain direction, or the anode current collector on which the anode mixture slurry is applied is traveled and dried, and in the related art, a magnetic field was applied by applying a magnet capable of applying a magnetic field having a magnetic force of the same strength and forming a magnetic force line of the same direction in a width direction with respect to the traveling direction of the anode current collector and the traveling direction.

FIG. 5 is a diagram conceptually illustrating an orientation of an anode active material when a magnetic field having a constant magnetic force strength and a magnetic force line direction as described above is applied. As can be seen from FIG. 5, when the magnetic force line direction of the magnetic field applied to the anode current collector has a constant direction regardless of a position according to a traveling direction of the anode current collector, the anode active material is simply oriented to be perpendicular to the anode current collector.

Accordingly, in order to develop the pores in the anode mixture layer, a magnetic field in which the magnetic force line direction and the magnetic force strength change may be applied to the anode current collector. In this manner, by applying a magnetic field in which the magnetic force line direction and the magnetic force strength change, the vertical orientation of the anode active material with respect to the anode current collector may increase and a distance between the anode active materials may increase according to a change in the magnetic force strength and the magnetic force line direction during the application of the magnetic field, so that the pores in the anode mixture layer may be developed. Furthermore, the developed pores may be oriented in a vertical direction with respect to the anode current collector to increase the orientation of the pores, thereby increasing the Z-tensor.

For example, the magnetic field may be a magnetic field having a magnetic force strength and a magnetic force line direction as illustrated in FIG. 6. Specifically, (a) of FIG. 6 is a view illustrating a change in magnetic force strength according to a traveling direction of the anode current collector. As illustrated in (a) of FIG. 6, the magnetic force strength may have a repeated pattern of gradually increasing to reach a maximum magnetic force strength and then decreasing thereafter.

Also, (b) of FIG. 6 is a diagram schematically illustrating a change in the magnetic force line direction according to the traveling direction of the anode current collector along with a change in the magnetic force strength. As illustrated in (b) of FIG. 6, in a section having a pattern in which the magnetic force strength increases and decreases, for example, a magnetic field in the magnetic force line direction from a lower surface of the anode current collector to an upper surface is formed, and in a next section having a pattern in which the magnetic force strength increases and decreases, a magnetic field in the magnetic force line direction from the upper surface to the lower surface of the anode current collector may be formed.

In this manner, the magnetic force strength of the magnetic field is periodically changed to repeat increase and decrease, and in a change period in which one magnetic force strength is changed, a first magnetic force line is formed that faces in the same direction, and in the next magnetic force strength change period, a second magnetic force line that faces in a direction opposite to the direction of the first magnetic force line is formed, so that the orientation of the anode active material is changed according to the magnetic force line direction, and since a space between the anode active materials may be formed by the change in the orientation of the anode active material, the pores in the anode mixture layer may be developed and the degree of orientation of the pores may be improved.

Meanwhile, in the magnetic field applied to the anode current collector, the magnetic force line direction may be applied in the vertical direction with respect to the anode current collector, as illustrated in (b) of FIG. 6. Since the magnetic field is applied in the vertical direction with respect to the anode current collector, the pores may be oriented in the vertical direction with respect to the anode current collector. Accordingly, it is preferable that the magnetic field does not have a magnetic force line oriented in a horizontal direction. If the magnetic force line direction is formed in the horizontal direction, the anode active material may be oriented in the horizontal direction, thereby inhibiting the development of pores and vertical orientation of the pores.

The magnetic field applied to the anode mixture layer may have a magnetic force line in the form of a sine wave as illustrated in FIG. (b) of FIG. 6 due to the change in the magnetic force strength and the corresponding change in the magnetic force line direction. Specifically, referring to (b) of FIG. 6, the magnetic force strength increases and decreases as the magnetic field is applied in a direction from the lower surface to the upper surface of the anode current collector according to the traveling direction of the anode current collector, and as the magnetic force strength meets the X axis, the direction of the magnetic force line is changed so that the magnetic field is applied in a negative direction of the Y axis, e.g., a direction from the upper surface of the anode current collector to the lower surface thereof, and the magnetic force strength increases and then decreases.

Specifically, the magnetic field may be changed as the magnetic force strength gradually increases and decreases as indicated by the arrow orienting in an up-down direction of (b) of FIG. 6. In this case, although the magnetic force line direction is changed, it may be formed in the vertical direction with respect to the anode current collector, and a maximum magnetic force strength that appears periodically according to the change in the magnetic force strength may be the same.

The development of pores and changes in the orientation of pores according to periodic changes in the magnetic force strength and magnetic force line direction are schematically illustrated in (c) of FIG. 6. As illustrated in (c) of FIG. 6, the anode active material is oriented toward an upper surface of the anode current collector as indicated by ① by the magnetic field having a magnetic force line direction from the lower surface to the upper surface of the anode current collector, the orientation of the anode active material is changed in a direction as indicated by ② by the magnetic force line from the upper surface of the anode current collector to the lower surface thereof according to a change in the magnetic force strength and the magnetic force line direction according to a traveling direction of the anode current collector, and subsequently, the orientation may be changed in a direction from the upper surface of the anode current collector to the lower surface thereof in a direction as indicated by ③. According to the change in the orientation of the anode active material, the anode active materials may be spaced apart from each other to form a space therebetween, thereby developing pores in the anode mixture layer and improving the degree of orientation of the pores.

That is, as a magnetic field in which the magnetic force strength and magnetic force line direction are changed according to the traveling direction of the anode current collector is applied, the orientation of the anode active materials may be changed to secure a space therebetween, and thus pores may be formed between the anode active materials and the orientation of the pores may be improved.

As described above, in the magnetic field applied to the anode mixture layer, the magnetic force strength and the magnetic force line direction may change at a constant period as the anode current collector moves. That is, a period of the change in the magnetic force strength of the magnetic field and the magnetic force line direction may be, for example, 100 mm to 1000 mm, but is not limited thereto. For example, when the change period is 100 mm, a magnetic field having the same magnetic force magnitude and magnetic force line direction may be applied to the anode current collector whenever the anode current collector moves by 100 mm. If the change period of the magnetic field is less than 100 mm, the magnetic field may not be sufficiently applied so it may be difficult to secure a distance between the anode active materials. Meanwhile, if the change period of the magnetic field exceeds 1000 mm, the number of rotations of the anode active material is reduced, so that pores may not be sufficiently developed.

An anode in which an anode mixture layer is formed on an anode current collector may be prepared by applying an anode mixture slurry including an anode active material to at least one surface of the anode current collector, drying the slurry, and then performing rolling.

At this time, the anode mixture slurry may be applied to the anode current collector under the application of a magnetic field in which the magnetic force strength and the magnetic force line direction are changed as described above and dried to orient the pores in the anode mixture layer, and after the anode mixture slurry is applied to the anode current collector, a magnetic field may be applied during a dry process to orient pores in the anode mixture layer.

The magnetic field may be applied from both upper and lower sides with respect to the traveling direction of the anode current collector. By applying a magnetic field from both upper and lower sides of the anode current collector, a magnetic force line in a direction perpendicular to the anode current collector may be applied, thereby orienting pores in a direction perpendicular to the anode current collector, and in addition, the magnetic force strength of the magnetic field may be significantly increased, compared to a case in which the magnetic field having a constant magnetic force strength and magnetic force line direction is applied as illustrated in FIG. 5.

The magnetic field applied in the present disclosure may have a maximum magnetic force strength of 4,000G or greater, for example, 4,500G or greater, 5,000G or greater, 5,500G or greater, 6,000G or greater, 6,500G or greater, 7,000G or greater, and may be 8,000G or greater. Meanwhile, the formation of pores in the anode mixture layer and the degree of orientation of the pores may be improved as the maximum magnetic force strength increases, and the maximum magnetic force strength may be 12,000G or less, for example, 10,000G or less, but is not particularly limited.

In addition, the magnetic field may be applied to the anode mixture layer for 1 second or greater, for example, 1.5 seconds or greater, 2 seconds or greater, 3 seconds or greater, or 4 seconds or greater, and may be applied for 30 seconds or less, for example, 25 seconds or less, 20 seconds or less, 15 seconds or less, or 10 seconds or less.

As another example, a magnetic field may pass through the anode current collector coated with the anode mixture slurry, for example, at a speed of 0.1 m/min to 50 m/min, but is not limited thereto. As the passing speed decreases, a residence time of the anode slurry in the magnetic field may increase, and thus, the orientation of the pores according to the orientation of the anode active material may be improved.

Viscosity of the anode mixture slurry may affect the orientation of the pores by the application of a magnetic field. For example, as the viscosity of the anode mixture slurry is lower, the resistance to flow of the anode mixture decreases even if the magnetic force strength and the magnetic field application time are the same, and accordingly, it may be easy to orient the anode active material and the pores in the vertical direction with respect to the anode current collector.

As an exemplary embodiment, the anode mixture slurry may have a viscosity of 300,000 cp or less when measured at 25°C and at a shear rate of 0.1 s$^{-1}$. The viscosity of the anode mixture slurry may be, for example, 150,000 cp or less, 130,000 cp or less, 100,000 cp or less, 75,000 cp or less, 50,000 cp or less, 35,000 cp or less, 30,000 cp or less, 27,500 cp or less, or 25,000 cp or less.

Meanwhile, a lower limit of the viscosity of the anode mixture slurry is not particularly limited but may be 5,000 cp (25°C, shear rate 0.1 s$^{-1}$) or greater. If the viscosity of the anode mixture slurry is too low, the anode active material in the anode mixture slurry may easily precipitate.

The drying process is a process for removing the solvent included in the anode mixture. At this time, since a drying unit is not particularly limited, a general drying unit may be applied. For example, various drying methods such as natural drying, heating drying, reduced pressure drying, and air drying may be used, and may include several operations.

The drying process is not particularly limited, but may be performed, for example, for 20 to 300 seconds, for example, 40 to 240 seconds, and 60 to 200 seconds within a range of 60 to 180°C, preferably, 70 to 150°C.

A rolling process may be performed after the drying process, and a thickness or density of the anode mixture layer may be adjusted through the rolling process. The rolling process may be performed by a general method such as a roll pressing method or a flat plate pressing method, and the anode mixture layer may be prepared to have a thickness of 20 μm or greater and 120 μm or less, for example, 40 μm or greater and 100 μm or less, or 60 μm or greater and 80 μm or less per side by the rolling process.

The anode obtained by the rolling may be a high-density electrode in which a density of the anode mixture layer is 1.5 g/cm$^3$ or greater. For example, the density of the anode mixture layer may be 1.5 g/cm$^3$ or greater and 2.2 g/cm$^3$ or less, or 1.5 g/cm$^3$ or greater and 2.0 g/cm$^3$ or less. When the electrode density of the anode satisfies the above range, power, lifespan, and high temperature storage characteristics may be improved during battery manufacturing.

In the present disclosure, the anode mixture layer may be formed by applying an anode mixture slurry including an anode active material, a conductive agent, a binder, and a solvent to an anode current collector. In addition, the anode mixture layer may further include additives such as a thickener if necessary.

The anode active material may be a carbon-based anode active material. The carbon-based anode active material may be suitably used in the present disclosure as long as it is commonly used in the preparation of an anode for a secondary battery. The carbon-based anode active material is not particularly limited, but may be artificial graphite, natural graphite, or a mixture of artificial graphite and natural graphite, and may be specifically artificial graphite. Artificial graphite may further improve the dispersibility of the slurry and may improve lifespan and high temperature storage characteristics.

Crystalline carbon-based active materials, such as artificial graphite or a mixture of artificial graphite and natural graphite, have more developed crystallographic properties of particles than an amorphous carbon-based active material. Therefore, the use of such a crystalline carbon-based active material as an anode active material may further improve the orientation characteristics of the carbon material in the anode mixture layer with respect to an external magnetic field, and furthermore, improve the orientation of the pores.

A form of artificial graphite or natural graphite may be amorphous, plate-like, flake-like, spherical, fibrous, or a combination thereof. In addition, in the case of using a mixture of artificial graphite and natural graphite, a mixing ratio may be 70:30 to 95:5 by weight.

The anode active material may be used without any particular limitation as long as it has a shape capable of occluding and deintercalating lithium ions, but in terms of improving the function of the anode active material for a lithium secondary battery, an aspect ratio may be generally 20 or greater. When a magnetic field is applied while using the anode active material having the above aspect ratio, the (002) plane of the anode active material particles may be oriented in a direction perpendicular to the surface of the anode current collector.

In addition, the anode active material may further include at least one of a silicon (Si) -based anode active material, a tin (Sn) -based anode active material, or a lithium vanadium oxide anode active material together with the carbon-based anode active material. When the anode active material further includes these materials, these materials may be included in a range of 1 to 50 wt% based on a total weight of the anode active material.

The Si-based anode active material may be Si, a Si-C composite, $SiO_x$ (0<x<2), or a Si-Q alloy. In the Si-Q alloy, Q may be an element selected from the group consisting of alkali metals, alkaline earth metals, group 13 elements, group 14 elements, group 15 elements, group 16 elements, transition metals, rare earth elements, and combinations thereof, and specifically, an element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof, in addition to Si.

In general, as an anode active material, a Si-based anode active material is known to have a large volume change. Thus, generally, a silicon-based anode active material may be added along with a carbon-based anode active material such as graphite, and in this case, carbon nano-tubes may be included as a conductive agent in terms of preventing swelling due to volume expansion of the silicon-based anode active material.

The Sn-based anode active material may be Sn, $SnO_2$, or a Sn-R alloy. In the Sn-R alloy, R, in addition to Sn and Si, may be an element selected from the group consisting of alkali metals, alkaline earth metals, group 13 elements, group 14 elements, group 15 elements, group 16 elements, transition metals, rare earth elements, and combinations thereof, and specifically, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof. In addition, at least one of these elements and $SiO_2$ may be mixed and used.

The content of the anode active material in the anode mixture layer may be 94 to 98 wt% based on a total weight of the anode mixture layer.

The conductive agent is used to impart conductivity to the electrode, and any conductive agent that is commonly used in secondary batteries may be used without limitations. For example, carbon-based material such as natural graphite, artificial graphite, carbon black, acetylene black, Ketjen black, carbon fiber, carbon nano-tubes, and the like; metal-based substances, such as metal powders, such as copper, nickel, aluminum, and silver, or a metal fiber; conductive polymers such as polyphenylene derivatives; or a mixture thereof may be used.

The content of the conductive agent may be 0.1 to 3 w% based on a total weight of the anode mixture layer.

The anode mixture layer may include a binder. The binder serves to bind the anode active material particles to each other and also bind the anode active material to the anode current collector. An aqueous binder may be used as the binder, but is not limited thereto.

Examples of the aqueous binder may include styrene-butadiene rubber (SBR), acrylated styrene-butadiene rubber, acrylonitrile-butadiene rubber, acrylic rubber, butyl rubber, ethylene-propylene copolymer, polyepichlorohydrin, polyphosphazene., polyacrylonitrile, polystyrene, ethylene-propylene-diene copolymer, polyvinylpyridine, chlorosulfonated polyethylene, latex, polyester resin, acrylic resin, phenol resin, epoxy resin, polyvinyl alcohol resin, acrylate-based resin or combinations thereof.

The content of the binder may be 1.5 to 3 wt% based on a total weight of the anode mixture layer.

The anode mixture layer may further include a thickener for imparting viscosity, together with the binder. The thickener may include a cellulose-based compound, and, for example, one or more of carboxymethyl cellulose, hydroxypropyl methyl cellulose, methyl cellulose, or alkali metal salts thereof may be mixed to be used. As the alkali metal, Na, K or Li may be used. The thickener may be used in an amount of 0.1 to 3 parts by weight based on 100 parts by weight of the anode active material.

The solvent may be an aqueous solvent such as water.

In the present disclosure, as the anode current collector, at least one selected from the group consisting of copper foil, nickel foil, stainless steel foil, titanium foil, nickel foam, copper foam, a polymer substrate coated with a conductive metal, and combinations thereof may be used. A thickness of the anode current collector is not particularly limited, and may be, for example, 5 to 30 μm.

In the anode provided by an exemplary embodiment in the present disclosure, the pores in the anode mixture layer are oriented in a vertical direction with respect to the anode current collector, thereby facilitating diffusion of lithium ions into the electrode, thereby improving the charging and discharging efficiency at a high C rate, and thus improving fast charging performance. As described above, the anode may have a predetermined colorimetric value and Z-tensor value as the pores in the anode mixture layer are oriented in the vertical direction with respect to the anode current collector, thereby improving battery performance.

A secondary battery may be manufactured using the anode in which the pores are vertically oriented as described above. The secondary battery may be manufactured by preparing an electrode assembly by alternately stacking the anode as described above and a cathode with a separator as a boundary, inserting the electrode assembly into a battery case, sealing the electrode assembly, and injecting an electrolyte into the battery case.

Hereinafter, the cathode will be described in more detail. The cathode is not particularly limited, but a cathode mixture slurry is applied to at least one surface of a cathode current collector, dried and rolled to form a cathode mixture layer, and any cathode commonly used in secondary batteries may be suitably used in the present disclosure.

The cathode mixture slurry may include a cathode active material, a binder, and a solvent, and may include a conductive agent and a thickener as necessary.

As the cathode active material, a compound allowing reversible intercalation and deintercalation of lithium (a lithiated intercalation compound) may be used. Specifically, at least one of a complex oxide of lithium and a metal selected from cobalt, manganese, nickel, and combinations thereof may be used.

A more specific example may be a lithium transition metal compound (oxide) having a layered structure as represented by a general formula $LiMO_2$, in which M includes at least one of transition metal elements such as Ni, Co, and Mn, and may further include another metal element or a non-metal element. The composite oxide may include, for example, a monolithic lithium transition metal composite oxide including one type of the transition metal element, a so-called binary lithium transition metal composite oxide including two types of the above transition metal element, and ternary lithium transition metal composite oxides including transition metal elements such as Ni, Co, and Mn as constituent elements, and may be, specifically, $Li_xMn_{1-y}M_yA_2$, $Li_xMn_{1-y}M_yO_{2-z}X_z$, $Li_xMn_2O_{4-z}X_z$, $Li_xMn_{2-y}M_yM'_zA_4$, $Li_xCo_{1-y}M_yA_2$, $Li_xCo_{1-y}M_yO_{2-z}X_z$, $Li_xNi_{1-y}M_yA_2$, $Li_xNi_{1-y}M_yO_{2-z}X_z$, $Li_xNi_{1-y}Co_yO_{2-z}X_z$, $Li_xNi_{1-y-z}Co_yM_zA_\alpha$, $Li_xNi_{1-y-z}Co_yM_zA_2$, $_\alpha X_\alpha$, $Li_xNi_{1-y-z}Mn_yM_zA_\alpha$, $Li_xNi_{1-y-z}Mn_yM_zO_{2-\alpha}X$ (in which $0.9\leq x\leq 1.1$, $0\leq y\leq 0.5$, $0\leq z\leq 0.5$, $0\leq\alpha\leq 2$, M and M' are the same or different and may be selected from the group consisting of Mg, Al, Co, K, Na, Ca, Si, Ti, Sn, V, Ge, Ga, B, As, Zr, Mn, Cr, Fe, Sr, V, and rare earth elements, A is selected from the group consisting of O, F, S, and P, and X is selected from the group consisting of F, S, and P.), and may be, for example, a ternary lithium transition metal composite oxide such as $Li(Ni_{1/3}Co_{1/3}Mn_{1/3})O_2$.

In addition, the composite oxide may be a lithium transition metal compound (oxide) represented by a general formula $Li_2MO_3$, in which M may include at least one of transition metal elements such as Mn, Fe, and Co, and may further include another metal element or a non-metal element, for example, $Li_2MnO_3$, $Li_2PtO_3$, etc.

Also, the cathode active material may be a solid solution of $LiMO_2$ and $Li_2MO_3$, for example, a solid solution represented by $0.5LiNiMnCoO_2$-$0.5Li_2MnO_3$.

Furthermore, a compound having a coating layer on the surface of the cathode active material may be used, or a mixture of the compound and a compound having a coating layer may also be used. The coating layer may include at least one coating element compound selected from the group consisting of oxide, hydroxide, oxyhydroxide, oxycarbonate, and hydroxycarbonate of a coating element. The compound constituting these coating layers may be amorphous or crystalline. As the coating element included in the coating layer, Mg, Al, Co, K, Na, Ca, Si, Ti, V, Sn, Ge, Ga, B, As, Zr, or a mixture thereof may be used.

In the cathode, the cathode active material may be 90 to 98 wt% based on a weight of a solid of a cathode mixture.

The binder serves to bind the cathode active material particles to each other and also bind the cathode active material to the cathode current collector, and the amount of the binder may be 1.5 to 5 wt% based on the weight of the solid of the cathode mixture. As the binder, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc. may be used.

The cathode mixture slurry may also include a thickener together with the binder to impart viscosity. The thickener may be the same as the thickener included in the anode mixture, and may be included in an amount of 0.1 to 3 parts by weight based on 100 parts by weight of the cathode active material.

The conductive agent is used to impart conductivity to the cathode, and any electronic conductive material commonly used in the cathode of a secondary battery may be suitably used, and the conductive agent used in the anode mixture may be used. The conductive agent may be used in an amount of 0.1 to 5 wt% based on a weight of the solid of the cathode mixture.

The solvent may be an aqueous solvent such as water, as well as a non-aqueous solvent. Any non-aqueous solvent that is commonly used in the preparation of a cathode mixture for a secondary battery may also be used in the present disclosure and may be, for example, N-methyl-2-pyrrolidone (NMP), but is not limited thereto.

As the cathode current collector, a metal having good conductivity, for example, aluminum, nickel, titanium, stainless steel, etc. may be used, and may have various forms such as a sheet type, a thin type, and a mesh type. A thickness of the cathode current collector is not particularly limited, and may be, for example, 5 to 30 $\mu$m.

As described above, a cathode having a cathode mixture layer formed on the cathode current collector may be prepared by applying the cathode mixture slurry to at least one surface of the cathode current collector, drying the slurry, and performing rolling.

The drying and rolling process may be performed by the same method as that of preparing the anode, and a detailed description thereof will be omitted.

A separator interposed between the cathode and the anode, as a porous sheet, a non-woven fabric, and the like, may be a multilayer film of polyethylene, polypropylene, polyvinylidene fluoride, or two or more layers thereof, a mixed multilayer film of two layers of polyethylene/polypropylene, a mixed multilayer film of three layers of polyethylene/polypropylene/ polyethylene, a mixed multilayer film of three layers of polypropylene/polyethylene/polypropylene, and the like, and furthermore, may include a porous heat-resistant layer on one or both surfaces of the porous sheet or nonwoven fabric. The separator is not particularly limited, but, for example, a separator having a thickness of about 10 to 40 $\mu$m may be used.

The electrolyte may include a non-aqueous organic solvent and a lithium salt. The non-aqueous organic solvent serves as a medium through which ions involved in an electrochemical reaction of the battery may migrate, and, for example, a non-aqueous organic solvent generally used in lithium ion secondary batteries, as carbonate-based, ester-based, ether-based, ketone-based, alcohol-based, or aprotic solvent, etc, may be used, and the organic solvent may be used alone or one or more mixtures thereof may be used.

Specifically, propylene carbonate (PC), ethylene carbonate (EC), diethyl carbonate (DEC), dimethyl carbonate (DMC), ethylmethyl carbonate (EMC), methylpropyl carbonate, dipropyl carbonate, fluoroethylene carbonate (FEC), dimethylsulfuroxide, acetonitrile, dimethoxyethane, diethoxyethane, vinylene carbonate, sulfolane, gamma-butyrolactone, propylene sulfite and tetrahydrofuran, etc. may be used.

The lithium salt is dissolved in an organic solvent, acts as a source of lithium ions in the battery to enable a basic operation of the lithium ion secondary battery and accelerate migration of lithium ions between the cathode and the anode. As the lithium salt, those commonly used in electrolytes for lithium secondary batteries may be used without limitations. The lithium salt may be expressed as Li+X-, and anion of the lithium salt is not particularly limited, but may include, for example, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

Specifically, one or more selected from the group consisting of $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiALO_2$, $LiAlCl_4$, $LiN(C_xF_{2x+1}SO_2)(C_yF_{2y+1}SO_2)$ (here, x and y are each independently an integer of 1 to 20), $LiCl$, $LiI$, and $LiB(C_2O_4)_2$ (lithium bis (oxalato) borate (LiBOB) may be used.

A concentration of the lithium salt is not particularly limited, but may be used within the range of 0.1 M to 2.0 M. The electrolyte may further include vinylene carbonate or an ethylene carbonate-based compound as needed to improve battery life.

In a secondary battery including an anode for a lithium secondary battery, in which the orientation of the pores in the anode mixture layer is dominant in the Z-axis, that is, a Z-orientation value of the pores inside the anode mixture layer is 0.25 or greater, as an anode, lithium ions may be easily diffused in the electrode during the charging/discharging process, thereby lowering resistance of the battery, and in particular, the charging/discharging efficiency at a high C rate may be improved, thereby improving cycle life characteristics and rapid charging performance.

According to another exemplary embodiment, a lithium secondary battery in which each anode and cathode as described above are alternately stacked with a separator as a boundary. The lithium secondary battery of the present disclosure may be manufactured by preparing an electrode assembly in which a separator is interposed between the cathode and the anode according to the present disclosure, receiving the electrode assembly into a battery case, and injecting an electrolyte into the battery case. An external shape of the lithium secondary battery of the present disclosure is not particularly limited, but may be a pouch-type battery, a cylindrical or prismatic battery using a can, or a coin-type battery.

**Example**

Hereinafter, the present disclosure will be described in more detail by way of example. However, the following examples show specific examples of the present disclosure and are not intended to limit the present disclosure thereby.

Example 1

Artificial graphite, styrene-butadiene rubber (SBR), and carboxymethyl cellulose (CMC) as a thickener were mixed in a mass ratio of 97.8:1.2:1.0, and then dispersed in distilled water from which ions were removed to prepare an anode mixture slurry. At this time, the viscosity of the anode mixture slurry was 29,000 cp (25°C, 0.1 s$^{-1}$).

The prepared anode mixture slurry was applied to a thickness of 200 $\mu$m on both upper and lower surfaces of an anode current collector of Cu foil, and the anode current collector passed through a drying device to be dried.

The drying device includes neodymium magnets installed on both upper and lower sides thereof for the anode current collector coated with the anode slurry, and a magnetic field having a magnetic force line direction perpendicular to the anode current collector by the magnets was applied for two seconds. At this time, the magnetic field had a maximum magnetic force of 8,000 G.

After drying, pressure was applied to prepare an anode having an electrode density of 1.55 g/cm$^3$.

For the anode mixture layer of the anode obtained accordingly, a colorimetric value was measured using a KONIKA MINOLTA chroma meter CR-410 measuring device, and also, a 3D Z-tensor value of pores formed in the anode mixture layer was measured using an X-ray microscope (Xraida 520 Versa of Zeiss company, 3D rendering software: GEODICT). Respective results are illustrated in Table 1.

Furthermore, a photograph obtained by imaging the anode mixture layer of the prepared anode with a scanning electron microscope (SEM) is illustrated in FIG. 7.

## Example 2

An anode was prepared in the same manner as that of Example 1, except that a magnetic field was applied for 4 seconds, and a colorimeter value and a Z-tensor value were measured for the prepared anode, respectively, and the results are illustrated in Table 1.

## Example 3

An anode was prepared in the same manner as that of Example 1, except that an anode mixture slurry having a viscosity of 12,000 cp (25°C, 0.1 s$^{-1}$) was used, and a colorimetric value and a Z-tensor value were measured for the prepared anode, respectively, and the results are illustrated in Table 1.

## Example 4

An anode was prepared in the same manner as that of Example 1, except that a magnetic field having a maximum magnetic force of 4, 000 G was applied, and a colorimeter value and a Z-tensor value were measured for the prepared anode, respectively, and the results are illustrated in Table 1.

## Comparative Example 1

An anode was prepared in the same manner as that of Example 1, except that a magnetic field was not applied, and a colorimeter value and a Z-tensor value were measured for the prepared anode, respectively, and the results are illustrated in Table 1.

Furthermore, the anode mixture layer of the prepared anode was photographed with a scanning electron microscope (SEM), and the obtained photograph is illustrated in FIG. 8.

## Evaluation of battery characteristics

96 wt% of a cathode active material of Li(Ni$_{0.8}$Co$_{0.1}$Mn$_{0.1}$)O$_2$, 2 wt% of a CNT conductive agent, and 2 wt% of a polyvinylidene fluoride binder were mixed in an N-methylpyrrolidone solvent to prepare a cathode mixture. The prepared cathode mixture was applied to both sides of a cathode current collector of, Al foil, dried and rolled to prepare a cathode.

The prepared cathode and the anode prepared in each of the Examples and Comparative Example were alternately stacked with a separator as a boundary, inserted into a pouch, and sealed, followed by injection of a mixed solvent (50: 50 volume ratio) of diethyl carbonate and ethylene carbonate in which 1M LiPF$_6$ was dissolved to prepare each lithium ion secondary battery.

For each of the prepared secondary batteries, DR-IR, rapid charge time, and capacity retention rate at 400 cycles were measured in the following manner, and the results are illustrated in Table 1.

**DR-IR:** A resistance value was measured at 50% of state of charge (SOC) using a cell charger and discharger.

**Rapid charge time:** A cell having a large capacity of 10 Ah or greater was manufactured using the anodes prepared according to Examples and Comparative Example and the same cathode. At this time, Ref. electrode (reference electrode) was inserted between the cathode and the anode to manufacture a three-electrode cell, through which a potential of the anode during charging was checked.

While CC charging the three-electrode cell into which the reference electrode was inserted to 4.2 V at a C-rate in the range of 0.75 to 2.5C, an SOC point at which a CCV value of the anode for each C-rate is constant below 0V was found, and operation-charging protocols of Comparative Example and Examples were configured by designating the found SOC point as a charge limit. Charge time of Comparative Example and Examples was calculated with the operation charging protocols prepared using the three-electrode cell.

**Capacity retention rate:** The high rate (2.5C) charging and discharging (0.3C) were repeated, and a capacity retention rate at 400 cycles was measured.

[Table 1]

|  | Viscosity (cp) (25°C, 0.1s⁻¹) | Magnetic force strength (G) | Application time (sec) | Colorimeter | z-tensor | DR-IR (mΩ) | Rapid charge time (min) | Capacity retention rate (%) (@400 cycle) |
|---|---|---|---|---|---|---|---|---|
| Comparative Example 1 | 29,000 | - | - | 41.0 | 0.23 | 1.30 | 24.1 | 75.6 |
| Example 1 | 29,000 | 8,000 | 2 | 43.5 | 0.27 | 1.02 | 20.5 | 93.5 |
| Example 2 | 29,000 | 8,000 | 4 | 43.9 | 0.29 | 0.99 | 20.3 | 95.5 |
| Example 3 | 12,000 | 8,000 | 2 | 44.2 | 0.30 | 0.95 | 20.1 | 95.9 |
| Example 4 | 29,000 | 4,000 | 2 | 42.5 | 0.26 | 1.11 | 21.6 | 91.7 |

When graphite particles are oriented in the vertical direction, an edge surface of the graphite is exposed to the surface, and a color thereof changes to be close to black. Accordingly, in Table 1, as a colorimetric value is closer to 0, it is white, and as the colorimetric value is closer to 100, it is black. In addition, it indicates that the pores between the graphite particles are developed and oriented in the vertical direction as the z-tensor value increases. As can be seen from Table 1, the anode of Comparative Example 1 to which no magnetic field was applied had a colorimetric value of 41.0 and a Z-tensor value of 0.23, but the anodes prepared in Examples 1 to 4 to which a magnetic field was applied had the colorimetric values of 43.5, 43.9, 44.2, and 42.5, and the Z-tensor values of 0.27, 0.29, 0.30, and 0.26, respectively, indicating higher values than that of Comparative Example 1.

From the measurement results of the colorimetric values and the Z-tensor values, it can be seen that, in the anode obtained in Examples, the anode active material was oriented in a direction perpendicular to the plane of the anode current collector and the pores were oriented.

Such results may be confirmed from FIGS. 7 and 8. FIGS. 7 and 8 are images of the same area of the anode of Example 1 and the anode of Comparative Example 1 at the same magnification (1500 X). Each anode active material in FIG. 7 has a smaller cross-section compared to the anode active material in FIG. 8, because the anode active material of the anode of Example 1 was oriented in a vertical direction with respect to the anode current collector by the application of a magnetic field.

Also, Example 3 is a case of using an anode mixture slurry having a small viscosity value, and exhibited colorimetric value and Z-tensor value higher than those of Example 1. From these results, it can be seen that it is easy to orient the anode active material and the pores in the vertical direction with respect to the anode current collector as the viscosity of the anode mixture slurry is lower.

In addition, in Example 4, a magnetic force strength of the applied magnetic field was changed, and it can be seen that, even when a magnetic field of 4000 G was applied, the anode active material and the pores had orientation in the vertical direction with respect to the anode current collector.

Meanwhile, comparing the performance of the lithium secondary batteries prepared using the respective anodes of Comparative Example 1 and Examples 1 to 4 and the same cathode, it can be seen that, when the colorimetric value was 42.5 or greater and the Z-tensor value was 0.25 or greater, an internal resistance value was small, compared to the case of using the anode of Comparative Example 1, and thus, the rapid charge time was significantly reduced, and the capacity retention rate was significantly increased.

Furthermore, comparing the results of Examples 1 to 4, even when a magnetic field of the same strength was applied, it can be seen that, as the application time of a magnetic field is longer, as the viscosity of the anode mixture slurry is lower, and as the magnetic force strength of the applied magnetic field is greater, the colorimetric value and the Z-tensor value tend to increase, and the capacity retention rate increases as the colorimetric value and the Z-tensor value increase. From these results, it can be seen that the battery performance may be improved as the colorimetric value and the Z-tensor value increase.

The anode according to an exemplary embodiment in the present disclosure may shorten a migration path of lithium ions in the anode mixture layer.

In addition, the anode according to another exemplary embodiment in the present disclosure may suppress an occurrence of lithium plating according to the use of a battery through shortened migration path of lithium ions and may also improve the rapid charging performance.

Furthermore, according to another exemplary embodiment in the present disclosure, by shortening the migration path of lithium ions in the anode mixture layer, the charging/discharging characteristics at a high C rate may be improved and the capacity retention rate may be improved.

While exemplary embodiments have been shown and described above, it will be apparent to those skilled in the art that modifications and variations could be made without departing from the scope of the present disclosure as defined by the appended claims.

**Claims**

1. An anode for a secondary battery, the anode comprising:

   an anode current collector; and
   an anode mixture layer including an anode active material formed on at least one surface of the anode current collector,
   wherein the anode mixture layer has a colorimetric value of 42.5 or greater, and a Z-tensor value of an internal pore of the anode mixture layer is 0.25 or greater.

2. The anode of claim 1, wherein
   the anode active material has an orientation arrangement value of 0.5 or less expressed by Equation 1 below.

   [Equation 1]

   $$A_h = \frac{1}{M} \sum_{j=0}^{n} (R_0 \cos^2\theta + \frac{\sin^2\theta}{R_0})^{-3/2}$$

   wherein $A_h$ is an orientation arrangement value, $R_0$ is the ratio of a major axis length to a minor axis length of an ellipsoid, in which there is no orientation arrangement when the value $R_0$ is 1, θ is a radian formed by the current collector and the anode active material measured by X-ray diffraction, M is a multiplicity factor, and n is the number of trials.

3. The anode of claim 1, wherein
   the anode active material has a (002) plane oriented in a direction perpendicular to the current collector.

4. A method for preparing an anode for a secondary battery, the method comprising:

   operation A of forming an anode mixture slurry layer by applying an anode mixture slurry including an anode active material to at least one surface of an anode current collector; and
   operation B of changing an orientation of the anode active material by applying a magnetic field to the anode mixture slurry layer,
   wherein the anode mixture layer has a colorimetric value of 42.5 or greater, and a Z-tensor value of an internal pore of the anode mixture layer is 0.25 or greater.

5. The method of claim 4, further comprising:

   operation C of drying the anode mixture slurry layer,
   wherein operation B is performed after operation A and before operation C or is performed simultaneously with operation C.

6. The method of claim 4, wherein,
   in operation B, a magnetic field in which a magnetic force line direction and a magnetic force strength change is applied from both upper and lower surfaces of the anode current collector.

7. The method of claim 4, wherein
   the magnetic field is applied in a direction perpendicular to the anode current collector.

8. The method of claim 4, wherein,

in the magnetic field, any one first magnetic force line, among a magnetic force line in a direction from an upper surface of the anode current collector to a lower surface thereof and a magnetic force line in a direction from the lower surface of the anode current collector to the upper surface thereof, and the other second magnetic force line are alternately applied periodically.

9. The method of claim 8, wherein
the first magnetic force line decreases after an increase in magnetic force strength to be changed into a second magnetic force line, and a magnetic force strength of the changed second magnetic force line is increased and then decreased.

10. The method of claim 8, wherein
the first magnetic force line and the second magnetic force line have a sine wave in a magnetic force strength and a magnetic force line direction.

11. The method of claim 8, wherein
the magnetic force line direction changes with a cycle of 100 to 1000 mm.

12. The method of claim 4, wherein
the magnetic field is 4,000G or greater.

13. The method of claim 4, wherein
the magnetic field is applied for 1 second or longer.

14. The method of claim 4, wherein
the anode mixture slurry has a viscosity of 150,000 cp (measured at 25°C and a shear rate of $0.1 \text{ s}^{-1}$) or less.

15. A lithium secondary battery comprising:

an anode for a lithium secondary battery;
a cathode; and
a separator interposed between the anode for a lithium secondary battery and the cathode,
wherein the anode for a lithium secondary battery is the anode of any one of claims 1 to 3 or the anode manufactured by the method of any one of claims 4 to 14.

FIG. 1

FIG. 2

FIG. 3

FIG. 4

(a) 3-D random     (b) planar random     (c) aligned

FIG. 5

FIG. 6

FIG. 7

FIG. 8

**EP 4 239 703 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20030052949